# EUROPEAN PATENT SPECIFICATION

(11) **EP 3 570 044 B1**
(45) Date of publication and mention of the grant of the patent: **03.03.2021**
(21) Application number: 19173962.2
(22) Date of filing: 10.05.2019
(51) Int. Cl.: G01P 5/165, B64D 43/02, G01F 1/46

(54) **AIR DATA PROBE ASSEMBLY TO FACILITATE RAPID REPLACEMENT**
LUFTDATENSONDENANORDNUNG ZUR ERMÖGLICHUNG EINES SCHNELLEN AUSTAUSCHES
ENSEMBLE DE SONDE DE DONNÉES D'AIR FACILITANT LE REMPLACEMENT RAPIDE

(30) Priority: 14.05.2018 US 201815978875
(43) Date of publication of application: 20.11.2019
(73) Proprietor: Honeywell International Inc., Morris Plains, NJ 07950 (US)
(72) Inventor: ZEBLEY, John, Morris Plains, NJ 07950 (US)
(74) Representative: Houghton, Mark Phillip

(56) References cited:
- US-A1- 2012 137 798
- US-A1- 2015 009 789

## Description

### BACKGROUND

Air data probes are sensors that are attached to an aircraft. These air data probes need to be replaced when they are rendered defective. Currently, the replacement procedure involves detaching the entire assembly from the aircraft skin and installing a new air data probe. The removal process includes loosening the caulking sealant, scraping the residual adhesive, disconnecting the electrical lines and the pneumatic tubes, and removing the air data probe. The aircraft skin then needs to be prepped for installation of the new air data probe.

Such a replacement procedure can be time consuming because of the amount of time taken for the caulking sealant to cure. Curing times for sealants can be very slow in adverse conditions, such as extreme cold weather, and result in considerable downtime before the aircraft can be released for flight. In some instances, the replacement process can take several hours.

Additionally, air data probes are typically located on the underside of an aircraft. Accordingly, for large aircraft, a technician replacing air data probes works high off the ground atop a ladder. Multi-step (and/or multi-part) replacement procedures may be particularly difficult in such circumstances, especially during cold weather while a technician is wearing gloves.

Therefore, there is a need in the art for improved systems and methods for replacement of air data probes.

US20120137798A1 discloses a device for protection of an external probe of an aircraft that projects through an opening that is made in the outside surface of the aircraft. The protective device includes a rigid flange for attachment to the outside surface of the aircraft and a flexible envelope for protection of the probe. The flange is attached by rapid attachment elements to the outside surface of the aircraft.

US20150009789A1 discloses a hard disc drive housing comprising a baseplate having a bottom portion and walls extending from a perimeter of the bottom portion, the walls including a clearance area; a cover that includes a planar interface surface with the baseplate, the interface surface having a width that exceeds the baseplate wall thickness in the clearance area; and a gasket configured to be compressed between the baseplate and the cover at the interface surface.

### SUMMARY

The present invention in its various aspects is as set out in the appended claims. An air data probe assembly is disclosed. The air data probe assembly includes an air data probe that includes a baseplate portion and a sensor portion. The baseplate portion includes one or more screw holes and one or more connectors on an underside of the baseplate portion. The air data probe assembly also includes a baseplate gasket that wraps around an underside and one or more edges of the baseplate portion, wherein the baseplate gasket comprises one or more holes corresponding to the one or more screw holes and the one or more connectors on the underside of the baseplate portion. When wrapped around the baseplate portion while the baseplate portion is fastened to a recess in an aircraft skin, the baseplate gasket creates a moisture-resistant seal between the air data probe and the recess in the aircraft skin.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a perspective view of an example air data probe assembly;
Figure 2 is a perspective view of the underside of an example air data probe assembly;
Figure 3A illustrates a cross-sectional view of an example air data probe assembly that is secured into a recess of the aircraft skin;
Figure 3B illustrates a cross-sectional view of another example air data probe assembly that is secured into a recess of the aircraft skin;
Figure 3C illustrates a cross-sectional view of another example air data probe assembly that is secured into a recess of the aircraft skin;
Figure 3D illustrates a cross-sectional view of another example air data probe assembly that is secured into a recess of the aircraft skin;
Figure 3E illustrates a cross-sectional view of another example air data probe assembly that is secured into a recess of the aircraft skin;
Figure 4 is a perspective view illustrating an example baseplate gasket and screw gaskets;
Figure 5A is a perspective view of a partially-assembled screw assembly;
Figure 5B is a perspective view of an assembled screw assembly; and
Figure 6 is a flow diagram illustrating an example method for installing an air data probe assembly.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Air data probes, such as pitot tubes, may be used to measure air flow velocity. For example, an aircraft may use one or more air data probes to derive an airspeed. When an air data probe needs to be replaced (or repaired), the entire aircraft may be taken out of service for anywhere from two hours to a full day to change out the air data probe (because of the long time required to dry the sealant to create a moisture barrier during flight). Additionally, during change out, there may be minimal space for access tools used to disconnect low pressure lines on an air data probe due to short connection line leads.

Furthermore, maintenance of air data probes may be performed in cold weather, at extreme heights (on a ladder), and/or by a technician wearing gloves. In such circumstances, small screws may be dropped. Additionally, the screw holes may serve as a possible avenue for moisture to seep beneath the air data probe, which may cause the air data probe to be inaccurate or fail all together.

Therefore, the present systems and methods describe an air data probe assembly to facilitate rapid replacement. Specifically, an injection-molded gasket may be used to create a tight fit to the air data probe (e.g., pitot tube) itself, e.g., a case-like silicon gasket may slip over (e.g., partially wrap around) a portion of the air data probe, and may seal the air data probe to the aircraft. The gasket may be made from silicon, rubber, and/or other materials, and may be highly pliable in a large temperature range and resistant to heat. Unlike conventional techniques, the screw assemblies used to fasten the air data probe assembly to the aircraft may be sealed with screw gaskets to prevent moisture from seeping through the screw holes. Additionally, the entire air data probe assembly may be preassembled so that small pieces are together and easy to use at time of installation. Using injection-molded, form-fit gaskets, the install time may be reduced to minutes, not hours with virtually no chance for mistakes.

The air data probe assembly described herein may minimize aircraft down time during maintenance, and therefore, lower costs for original equipment manufacturers (OEMs). The air data probe assembly may also eliminate multiple points of installation error and require virtually no craftsmanship in the installation process. The air data probe assembly described herein may address and reduce messy installations using liquid-type sealants, which may require long dry times. Furthermore, once assembled, the air data probe assembly described herein may not require inspection for gaps in sealing and dry time.

For pedagogical purposes, the examples provided in the specification may be written in terms of an air data probe on an aircraft. However, it is understood that the teachings of the present specification are also applicable to sensor probes on other vehicles on the land, air or sea, e.g., helicopters, space borne vehicles, automobiles, trucks, trains, ships, submarines, etc. For example, a pitot tube may be used to measure water speed of a water-based vehicle. Alternatively, a pitot tube may be used to measure land speed of a land-based vehicle.

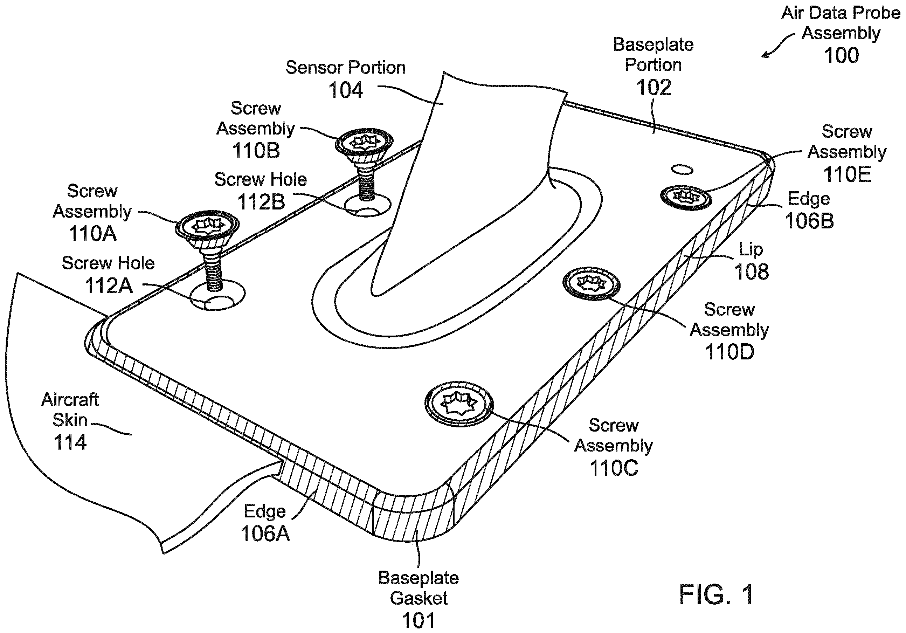

Figure 1 is a perspective view of an example air data probe assembly 100. The air data probe may be a pitot tube that measures the pressure and/or velocity of air (or fluid) flowing into the sensor portion 104. For example, an aircraft may use one or more air data probes to measure airspeed.

The air data probe assembly 100 may include an air data probe with a baseplate portion 102 and a sensor portion 104. The baseplate portion 102 may be generally planar, and the sensor portion 104 may extend (i.e., protrude) from the baseplate portion 102. Although illustrated as being generally rectangular with rounded corners, the baseplate portion 102 may have any suitable shape (e.g., triangular, oval, circular, etc.) and corner configuration (e.g., square or rounded). Furthermore, the edges of the baseplate portion 102 may be beveled and/or 90 degree angles. The air data probe may be made of one or more metals, e.g., titanium, nickel, aluminum, steel, or any other suitable material.

The air data probe assembly 100 may also include a flexible baseplate gasket 101 with edges 106A-B and a gasket base (not shown). The baseplate gasket 101 is illustrated with shading in Figure 1. The baseplate gasket 101 may wrap around the edges and the underside of the baseplate portion 102. As used herein, the term "underside" with reference to an air data probe or baseplate portion 102 may refer to the surface of the air data probe or baseplate portion 102 that is covered or mostly covered by the baseplate gasket 101, i.e., the side that faces the aircraft when installed. Conversely, the term "exterior-side" with reference to an air data probe or baseplate portion 102 may refer to the surface of the air data probe or baseplate portion 102 that is mostly (or completely) uncovered by the baseplate gasket 101, i.e., the side that faces away from the aircraft when installed and/or the side from which the sensor portion 104 protrudes.

In some configurations, the baseplate gasket 101 may include a lip 108 that extends from one or more of the edges 106 of the baseplate gasket 101 towards the sensor portion 104, i.e., the lip 108 may curl inward and partially overlap the exterior-side of the baseplate portion 102. Alternatively, the baseplate gasket 101 may include a lip 108 that extends from one or more of the edges 106 of the baseplate gasket 101 away from the sensor portion 104, i.e., the lip 108 may extend outward (away from the air data probe) to overlap with the adjacent, non-recessed aircraft skin 114. Alternatively, the baseplate gasket 101 may include a lip 108 that extends from one or more of the edges 106 of the baseplate gasket 101 towards the sensor portion 104 and away from the sensor portion 104, i.e., the lip 108 may partially overlap the exterior-side of the baseplate portion 102 and extend outward (away from the air data probe) to overlap with the adjacent, non-recessed aircraft skin 114. The lip 108 of the baseplate gasket 101 may be level with or rise above the adjacent, non-recessed aircraft skin 114 and/or the exterior-side of the baseplate portion 102. Alternatively, the baseplate gasket 101 may not include a lip 108.

The air data probe assembly 100 may be installed on the aircraft skin 114. Aircraft skin 114 is generally an exterior shell covering the aircraft, e.g., made of aluminum and/or other metals. A small recess, approximately the same dimensions (i.e., the same footprint) and/or depth as the baseplate portion 102, may be provided in the aircraft skin 114. The air data probe assembly 100 may be secured (e.g., fastened) in the recess of the aircraft skin 114 using one or more screw assemblies 110A-110E, e.g., the baseplate gasket 101 may be pressed between the aircraft skin 114 and the air data probe. While only a portion of the aircraft skin 114 is illustrated in Figure 1, it should be noted that the aircraft skin 114 may surround all four edges 106 when the air data probe assembly is placed in (and secured to) the recess in the aircraft skin 114.

As will be described in more detail below, each screw assembly 110 may include a screw, a flexible screw gasket, a spacer, and/or a cir-clip. Each screw assembly 110 may be screwed into a respective screw hole 112A-B in the baseplate portion 102. Each screw gasket may be a moisture-resistant sleeve (e.g., made of silicon, rubber, and/or other materials) that wraps around a portion of a respective screw, e.g., the bottom (and optionally edges) of the screw head. The screw gaskets are illustrated with shading in Figure 1. The screw holes 112 in the baseplate portion 102 (and in the aircraft) may be threaded to receive the screw assemblies 110.

Therefore, the term "screw" herein may refer to any fastener that is drivable and includes a generally cylindrical, threaded portion, e.g., bolt, screw, threaded cylinder, etc. It should be noted that the screw assemblies 110 may use any suitable drive type, e.g., Phillips, slotted, hex, Robertson, Torx, Pozidriv, or other proprietary designs. Furthermore, any number of screw assemblies 110 may be used to fasten the air data probe assembly 100 to the aircraft. Alternatively, other means of securing the air data probe assembly 100 may be used.

When the air data probe assembly 100 is secured to the aircraft, the baseplate gasket 101 and the screw gasket(s) (on the screw assembl(ies) 110) may form moisture-resistant seals, effectively preventing moisture leaking into the aircraft from the atmosphere, e.g., during flight and on the ground. Specifically, the baseplate gasket 101 may form a seal along the edges 106 and underside of the baseplate portion 102, i.e., preventing moisture from seeping into the aircraft along the edges 106 and underside of the baseplate portion 102. The screw gasket(s) (on the screw assembl(ies) 110) may prevent moisture and/or other contamination from seeping in through the screw hole(s) 112.

The baseplate gasket 101 and the screw gasket(s) (on the screw assembl(ies) 110) may be injection-molded to fit tightly around the baseplate portion 102 and the screws, respectively. Thus, the baseplate gasket 101 and the screw gasket(s) may be quickly manufactured in a highly-reproducible way without hand-crafting, i.e., no hand layup.

It should be noted that installation of the air data probe assembly (i.e., securing the air data probe assembly 100 to the aircraft) may not require chemical sealant. Accordingly, the air data probe assembly 100 may eliminate downtime required to allow sealant to dry, i.e., cure. The baseplate gasket 101 and the screw gasket(s) may be made of silicon, rubber, and/or other moisture-resistant materials to extreme temperatures (hot and cold).

Additionally, since the air data probe assembly 100 may be attached to the underside of aircraft, any maintenance may be done on a ladder, in the cold, and/or by a technician wearing gloves. The air data probe assembly 100 may be mostly preassembled (i.e., during pre-installation, the baseplate gasket 101 may be wrapped around the baseplate portion 102 and the screw gasket(s) may be wrapped around the screws), and require only that screw assemblies 110 be threaded into the aircraft. Pre-assembly may reduce installation time and possible errors, e.g., the technician does not have to guess whether sealant has completely dried.

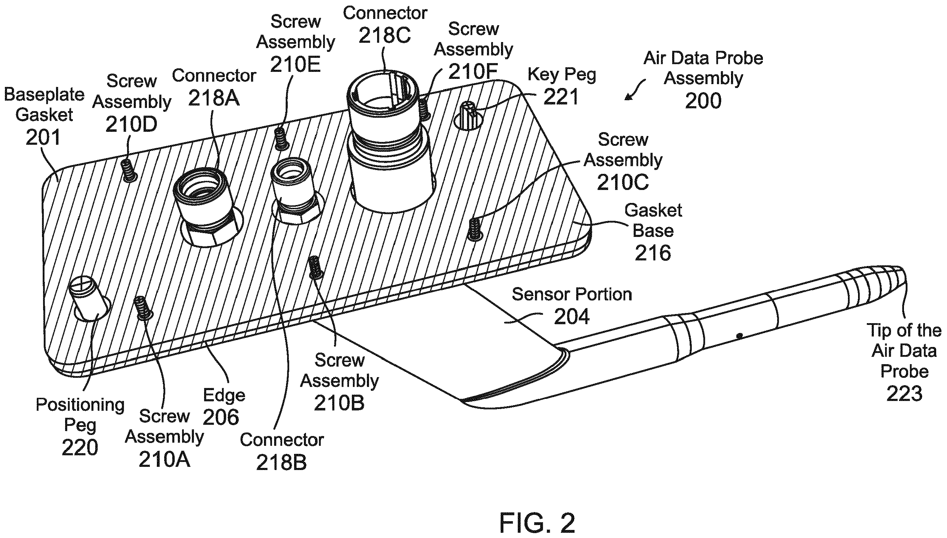

Figure 2 is a perspective view of the underside of an example air data probe assembly 200. The air data probe assembly 200 may include an air data probe (with a baseplate portion 102 and a sensor portion 204) that is partially wrapped by a baseplate gasket 201 with edges 206, a gasket base 216, and optionally a lip (not shown). The baseplate gasket 201 is illustrated with shading in Figure 2. As before, one or more screw assemblies 210A-F may be used to fasten the air data probe assembly 200 to the aircraft skin 114.

Additionally, the air data probe may include one or more connector 218A-C. Each connector 218 maybe a protrusion (e.g., a tube, pipe, duct, hose, connector, pass-through, peg, threaded cylinder, etc.) from the underside of the air data probe. Each connector 218 may connect to (or pass through) a hose, tube, braided line, wire, connector and/or cable extending from the aircraft. For example, one or more connectors 218 may facilitate electrical, hydraulic, and/or pneumatic (e.g., pressure-sensitive) connection(s) between the aircraft and the air data probe. Furthermore, the connectors 218 may use any types of connection, e.g., threaded, threadless gendered, threadless genderless, flanged, quick-connect, etc.

In one example, an electrical line or port on (or extending from) the aircraft may mate to an electrical connector 218 on the underside of the air data probe. In one example, the electrical line or port on (or extending from) the aircraft may be a male electrical connector, while the electrical connector 218 on the underside of the air data probe may be a female connector. Alternatively, the electrical line or port on (or extending from) the aircraft may be a female electrical connector, while the electrical connector 218 on the underside of the air data probe may be a male connector. The aircraft may form one or more such electrical connections with the air data probe. For example, an electrical connection may provide power and/or heat to a heater in, near, or on the tip of the air data probe 223, i.e., to prevent icing at high altitudes.

Additionally, a pneumatic tube or port on (or extending from) the aircraft may mate to a pneumatic connector 218 on the underside of the air data probe. In one example, the pneumatic tube or port on (or extending from) the aircraft may be a male pneumatic connector, while the pneumatic connector 218 on the underside of the air data probe may be a female connector. Alternatively, the pneumatic tube or port on (or extending from) the aircraft may be a female pneumatic connector, while the pneumatic connector 218 on the underside of the air data probe may be a male connector. This pneumatic connection may be a low pressure line that enables the air data probe to measure air pressure entering the air data probe.

Optionally, the air data probe may include a positioning peg 220 (e.g., a cylindrical protrusion) that extends from the underside of the air data probe. The positioning peg 220 may correspond in size and location to a hole in a recess of the aircraft skin 114, i.e., the aircraft may have a hole (the same size as the positioning peg 220) to receive the positioning peg 220. In other words, the positioning peg 220 may align the air data probe assembly 200 to the correct position on the aircraft skin 200 during installation.

Since the air data probe may be orientation-specific (i.e., it requires that it be installed in one particular orientation for proper operation), the air data probe may optionally include a key peg 221 (e.g., a non-cylindrical protrusion) that extends from the underside of the air data probe. The key peg 221 may correspond in size, location, and shape to a hole in the recess of the aircraft skin 114, i.e., the aircraft may have a hole (the same size and shape as the key peg 221) to receive the key peg 221. Therefore, the key peg 221 may align the air data probe assembly 200 to the correct position and orientation (e.g., sensor tip 223 pointing to the front of the aircraft) in the recess of the aircraft skin 114 during installation.

The gasket base 216 may include holes corresponding to the connector(s) 218, screw assembl(ies) 210, optional positioning peg 220, and/or optional key peg 221. In one configuration, gasket base 216 may include a separate hole for each connector 218, screw assembly 210, optional positioning peg 220, and optional key peg 221 on the air data probe. Alternatively, a single hole in the gasket base 216 may be large enough to allow multiple connector(s) 218, screw assembl(ies) 210, optional positioning peg 220, and/or optional key peg 221 to pass through the gasket base 216. Alternatively, some holes in the gasket base 216 may pass a single element (connector 218, screw assembly 210, optional positioning peg 220, and optional key peg 221) through the gasket base 216 while others may pass multiple elements through the gasket base 216. Despite the various holes in the gasket base 216, the baseplate gasket 216 may cover greater than half the surface area of the underside of the baseplate portion 102, e.g., greater than 50%, 60%, 70%, 80%, or 90%.

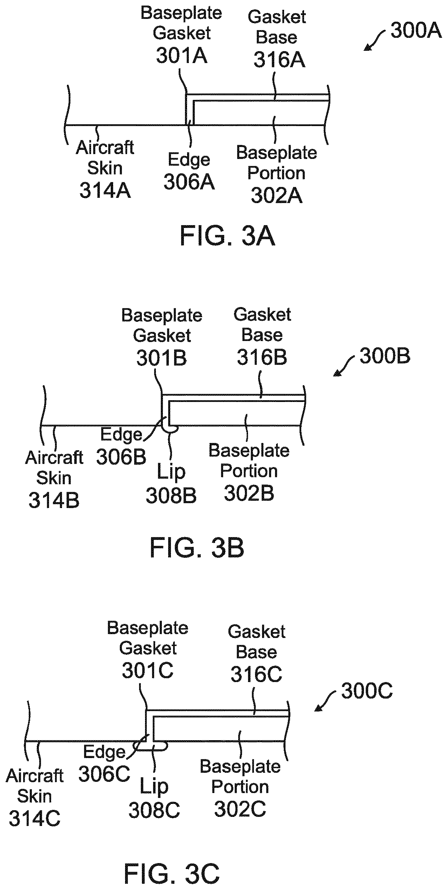

Figures 3A-3E illustrate cross-sectional views of example air data probe assemblies 300A-E, respectively. It should be noted that Figures 3A-3E may not illustrate all components of the air data probe assemblies 300A-E (e.g., connectors 218, screw assemblies 210, positioning peg 220, key peg 221, sensor portion 104 of the air data probe, etc.), but should not be viewed as limiting. Instead, Figures 3A-3E illustrate various examples of lips 308B-E that may extend from the edges 306A-E of the baseplate gaskets 301A-E (or lack thereof).

Figure 3A illustrates a cross-sectional view of an example air data probe assembly 300A that is secured into a recess of the aircraft skin 314A. An edge 306A of the baseplate gasket 301A may extend from the gasket base 316A. However, the baseplate gasket 301A may not include a lip 108, i.e., the end of the edge may be level (or approximately level) and non-overlapping with the adjacent, non-recessed aircraft skin 314A and exterior-side of the baseplate portion 302A. Even without a lip 108, the baseplate gasket 301A may still form a moisture-resistant seal between the aircraft skin 314A and the baseplate portion 302A because the baseplate portion 302A may be secured (e.g., fastened) tightly to the aircraft skin 314, e.g., using one or more screw assemblies 110. The top of the edge 306A may be exposed to the atmosphere following installation of the air data probe assembly 300A.

Figure 3B illustrates a cross-sectional view of another example air data probe assembly 300B that is secured into a recess of the aircraft skin 314B. Like Figure 3A, an edge 306B of the baseplate gasket 301B may extend from the gasket base 316B. However, unlike Figure 3A, the baseplate gasket 301B may include a lip 308B that extends beyond the adjacent, non-recessed aircraft skin 314B and the exterior-side of the baseplate portion 302B, e.g., the lip 308B may be exposed to the atmosphere following installation of the air data probe assembly 300B. The lip 308B may overlap with the exterior-side of the baseplate portion 302B, which may provide a more comprehensive moisture barrier than the than the configuration in Figure 3A.

Figure 3C illustrates a cross-sectional view of another example air data probe assembly 300C that is secured into a recess of the aircraft skin 314C. Like Figure 3B, the baseplate gasket 301C may include a lip 308C that extends beyond the adjacent, non-recessed aircraft skin 314C and the exterior-side of the baseplate portion 302C, e.g., the lip 308C may be exposed to the atmosphere following installation of the air data probe assembly 300C. The lip 308C may overlap with the exterior-side of the baseplate portion 302C and the adjacent, non-recessed aircraft skin 314C, which may provide a more comprehensive moisture barrier than the than the configurations in Figures 3A and 3B.

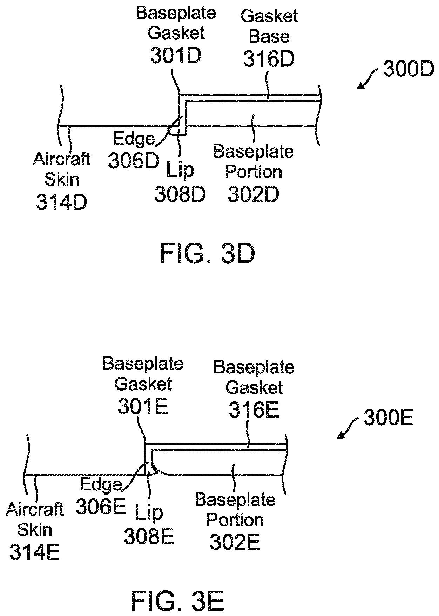

Figure 3D illustrates a cross-sectional view of another example air data probe assembly 300D that is secured into a recess of the aircraft skin 314D. The baseplate gasket 301D may include a lip 308D that extends beyond the adjacent, non-recessed aircraft skin 314D and the exterior-side of the baseplate portion 302D, e.g., the lip 308D may be exposed to the atmosphere following installation of the air data probe assembly 300D. However, the lip 308D may overlap with only the adjacent, non-recessed aircraft skin 314C, not the exterior-side of the baseplate portion 302D.

Figure 3E illustrates a cross-sectional view of another example air data probe assembly 300E that is secured into a recess of the aircraft skin 314E. The baseplate gasket 301E may include a lip 308E that that does not extend beyond the adjacent, non-recessed aircraft skin 314E. Rather, the edge of the baseplate portion 302E may be beveled, and the lip 308E may overlap a small portion of the exterior-side of the baseplate portion 302E, e.g., the beveled portion of the exterior-side of the baseplate portion 302E. This may provide a more comprehensive moisture barrier and/or greater aerodynamic benefits than Figures 3A-3B. The lip 308E may be exposed to the atmosphere following installation of the air data probe assembly 300E.

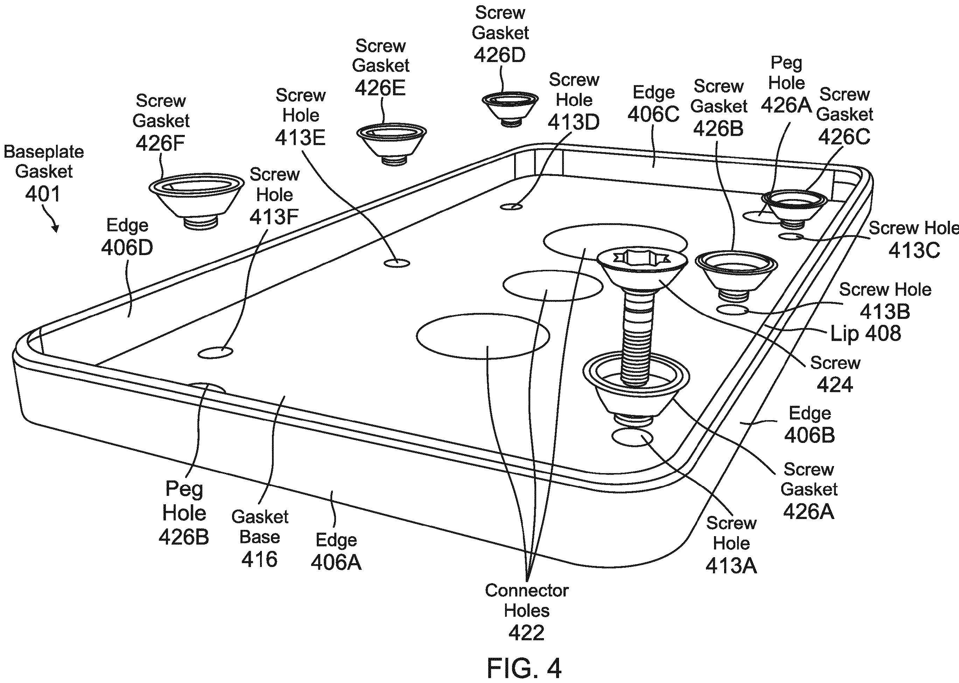

Figure 4 is a perspective view illustrating an example baseplate gasket 401 and screw gaskets 426A-F. The baseplate gasket 401 may be injection-molded and may be made of silicon, rubber, and/or other moisture-resistant materials.

The baseplate gasket 401 may wrap partially around a baseplate portion 102 of an air data probe. When the air data probe assembly 100 is secured to a recess in the aircraft skin 114, the baseplate gasket 401 may form a moisture-resistant seal between the baseplate portion 102 and the aircraft skin 114. In other words, the baseplate gasket 401 may prevent moisture or other contaminants from seeping in between the baseplate portion 102 and the aircraft skin 114 (and into the aircraft).

The air data probe assembly 100 may be secured to the aircraft using one or more screw assemblies 110. Each screw assembly may include at least a screw gasket 426A-F that is (at least partially) wrapped around a screw 424. Each screw assembly 100 may be threaded through a corresponding screw hole 112 in the baseplate portion 102 and a screw hole 413A-F in the gasket base 416.

The baseplate gasket 401 may include edges 406A-D that extend (generally perpendicular) from the gasket base 416. A lip 408 may extend above the edges and curl inward, i.e., toward the center of the baseplate portion 102. Alternatively, or additionally, the lip 408 may curl outward, i.e., extend away from the center of the baseplate portion 102. Alternatively, the lip 408 may curl inward and outward, i.e., toward and away from the center of the baseplate portion.

The gasket base 416 may include one or more connector holes 422 corresponding to the connectors 218 on the underside of the baseplate portion 102. The gasket base 416 may also include one or more screw holes 413A-F corresponding to screw holes 112 in the baseplate portion 102 used to fasten an air data probe assembly 100 to an aircraft. The gasket base 416 may also include one or more peg holes 426A-B, e.g., for a positioning peg 220 and/or a key peg 221.

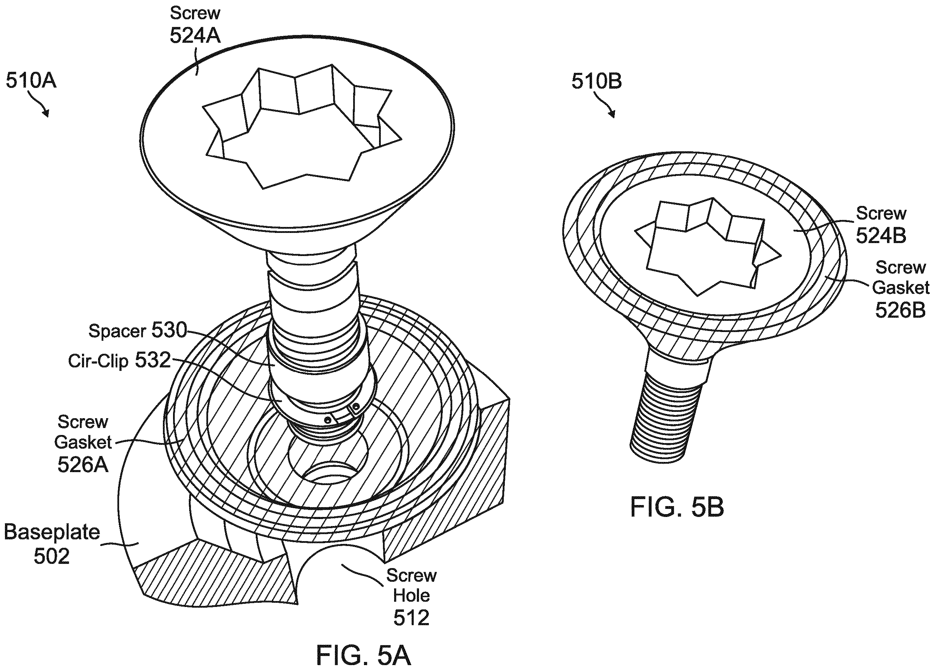

Figure 5A is a perspective view of a partially-assembled screw assembly 510A. Each screw assembly 510A may include a screw 524A, a flexible screw gasket 526A, a spacer 530, and a cir-clip 532. The screw gasket 526A may be a moisture-resistant sleeve (e.g., made of silicon, rubber, and/or other materials) that wraps around a portion of a respective screw 524A, e.g., the bottom (and optionally edges) of the head of the screw 524A. In other words, the screw gasket 526A may create a moisture-resistant seal between the screw 524A and the baseplate portion 502 and prevent moisture from seeping into the aircraft via a screw hole 512 in the baseplate portion 502. The screw gasket526A is illustrated with shading in Figure 5A.

If the flexible screw gasket 526A were to bunch up (i.e., crimp) as the screw 524A is turned, it may prevent the screw gasket 526A from creating a robust, moisture-resistant seal between the screw 524A and the baseplate portion 502. The spacer 530 may prevent the flexible screw gasket 526A from bunching up.

The cir-clip 532 may hold the spacer 530 and the screw gasket 526A in place along the shaft of the screw 524A. In other words, the cir-clip 532 may hold the screw assembly 510A together for easy installation, i.e., an installer can carry a single screw assembly 510A rather than a separate screw 524A, screw gasket 526A, spacer 530, and/or cir-clip 532.

Each screw assembly 510A may be screwed into a respective screw hole 512 in the baseplate portion 502 and into a screw hole in the aircraft. It should be noted that the screws 524A may use any suitable drive type, e.g., Phillips, slotted, hex, Robertson, Torx, Pozidriv, or other proprietary designs.

Figure 5B is a perspective view of an assembled screw assembly 510B. Accordingly, in Figure 5B, a screw gasket 526B is wrapped around a screw 524B, i.e., around the bottom (and optionally edges) of the head of the screw 524B. The screw gasket526B is illustrated with shading in Figure 5B. A spacer and a cir-clip may be screwed and slid onto the threaded portion of the screw 524B, respectively. However, the spacer and the cir-clip may not be visible beneath the screw gasket 526B.

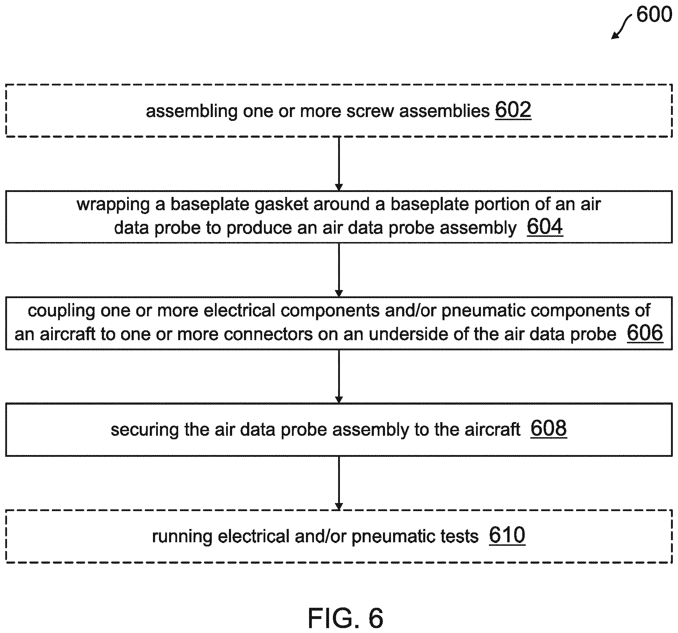

Figure 6 is a flow diagram illustrating an example method 600 for installing an air data probe assembly 100. For example, the method 600 may be performed during aircraft maintenance. The method 600 can be implemented using any of the air data probe assemblies or elements described above.

The method 600 optionally starts at block 602 with assembling one or more screw assemblies 510A. Each screw assembly 510A may include a screw 524A that is partially wrapped with a screw gasket 526A. The screw gasket 526A may be an injection-molded sleeve (e.g., made of silicon, rubber, and/or other materials) that wraps around a portion of the screw 524A, e.g., the bottom (and optionally edges) of the head of the screw 524A.

Each screw assembly 510A may also include a spacer 530 that prevents the flexible screw gasket 526A from bunching up. Each screw assembly 510A may also include a cir-clip 532 that holds the spacer 530 and the screw gasket 526A in place along the shaft of the screw 524A. In other words, the cir-clip 532 may hold the screw assembly 510A together 510A as a single assembly rather than requiring an installer to carry a separate screw 524A, screw gasket 526A, spacer 530, and/or cir-clip 532. The screw assembly 510A may be preassembled on the ground (and/or off-site) instead of while on a ladder during installation.

The method 600 proceeds to block 604 with wrapping (e.g., partially wrapping) a baseplate gasket 101 around a baseplate portion 102 of an air data probe to produce an air data probe assembly 100. The baseplate gasket 101 may be flexible because it is made of injection-molded silicon, rubber, and/or other moisture-resistant materials. Accordingly, an installer (e.g., a mechanic or technician) may wrap the baseplate gasket 101 around the baseplate portion 102 by hand and without any special tools. Furthermore, the baseplate gasket 101 may be wrapped around the baseplate portion 102 on the ground (and/or off-site) instead of while on a ladder during installation.

The baseplate portion 102 may include a gasket base 216, edges 106 that extend from the gasket base 216, and optionally, a lip 108 that extends from the edges 106. The lip 108 may curl inward and/or outward, i.e., the lip 108 may extend towards a sensor portion 104 of the air data probe and/or away from the sensor portion 104.

The gasket base 216 may have one or more holes that correspond to one or more elements on the baseplate portion 102. For example, the baseplate gasket 101 may have one or more connector holes 422 that correspond in size, location, and/or shape to one or more connectors 218 protruding from the underside of the baseplate portion 102. The baseplate gasket 101 may also have one or more peg holes 426 that correspond in size, location, and/or shape to one or more positioning pegs 220 and/or key pegs 221 protruding from the underside of the baseplate portion 102. The baseplate gasket 101 may also have one or more screw holes 413 that correspond in size, location, and/or shape to one or more screw holes 112 in the baseplate portion 102.

The method proceeds to block 606 with coupling one or more electrical components and/or pneumatic components of an aircraft to one or more connectors 218 on an underside of the air data probe. For example, an electrical line or port on (or extending from) the aircraft may mate to an electrical connector 218 on the underside of the air data probe, e.g., to provide power and/or heat to a heater in the tip of the air data probe 223 to prevent icing at high altitudes. Additionally, or alternatively, a pneumatic tube or port on (or extending from) the aircraft may mate to a pneumatic connector 218 on the underside of the air data probe, e.g., to form a pneumatic connection that enables the air data probe to measure air pressure entering the air data probe.

The method proceeds to block 608 with securing the air data probe assembly 100 to the aircraft. This may include aligning a positioning peg 220 and/or a key peg 221 on the underside of the air data probe assembly 200 with corresponding holes in the recess of an aircraft skin 114. Once aligned, the air data probe assembly 200 may be seated (i.e., placed in) the recess such that the corresponding holes in the recess of an aircraft skin 114 receive the positioning peg 220 and/or the key peg 221 on the underside of the air data probe assembly 200.

Once it is correctly seated in a recess of the aircraft skin 114, the air data probe assembly 100 may be fastened in a recess of the aircraft skin 114 using one or more screw assemblies 110. Specifically, each screw assembly 110 may be threaded through a screw hole 112 in the baseplate portion 102, a screw hole 413 in the gasket base 416, and into a screw hole in the recess of the aircraft skin 114. Any number of screw assemblies 110 may be used to secure the air data probe assembly 100 to the aircraft.

It should be noted that the air data probe assembly 100 may be secured to the aircraft without any chemical sealant. Once secured, the baseplate gasket 101 may form a moisture-resistant seal that prevents moisture from entering the aircraft between the aircraft skin 114 and the baseplate portion 102. Similarly, the one or more screw gaskets 526A may form a moisture-resistant seal that prevents moisture from entering the aircraft through the one or more screw holes 512 in the baseplate portion 502. It should be noted that the baseplate gasket 101 and the one or more screw gaskets 526A may provide moisture barriers during flight and on the ground.

Optionally, the method 600 may further proceed to block 610 with running electrical and/or pneumatic tests, i.e., to test the electrical and/or pneumatic connections to the air data probe assembly 100. In some configurations, the method 600 may be completed in 30 minutes or less.

### Terminology

Brief definitions of terms, abbreviations, and phrases used throughout this application are given below.

The phrase "based on" does not mean "based only on," unless expressly specified otherwise. In other words, the phrase "based on" describes both "based only on" and "based at least on". Additionally, the term "and/or" means "and" or "or". For example, "A and/or B" can mean "A", "B", or "A and B". Additionally, "A, B, and/or C" can mean "A alone," "B alone," "C alone," "A and B," "A and C," "B and C" or "A, B, and C."

The terms "connected", "coupled", and "communicatively coupled" and related terms are used in an operational sense and are not necessarily limited to a direct physical connection or coupling. Thus, for example, two devices may be coupled directly, or via one or more intermediary media or devices. As another example, devices may be coupled in such a way that information can be passed there between, while not sharing any physical connection with one another. Based on the disclosure provided herein, one of ordinary skill in the art will appreciate a variety of ways in which connection or coupling exists in accordance with the aforementioned definition.

The phrases "in exemplary configurations", "in example configurations", "in some configurations", "according to some configurations", "in the configurations shown", "in other configurations", "configurations", "in examples", "examples", "in some examples", "some examples" and the like generally mean the particular feature, structure, or characteristic following the phrase is included in at least one configuration of the present disclosure, and may be included in more than one configuration of the present disclosure. In addition, such phrases do not necessarily refer to the same configurations or different configurations.

If the specification states a component or feature "may," "can," "could," or "might" be included or have a characteristic, that particular component or feature is not required to be included or have the characteristic.

The terms "responsive" or "in response to" may indicate that an action is performed completely or partially in response to another action.

In the above description, reference numbers have sometimes been used in connection with various terms. Where a term is used in connection with a reference number, this may be meant to refer to a specific element that is shown in one or more of the Figures. Where a term is used without a reference number, this may be meant to refer generally to the term without limitation to any particular Figure.

The methods disclosed herein comprise one or more steps or actions for achieving the described method. The method steps and/or actions may be interchanged with one another without departing from the scope of the claims. In other words, unless a specific order of steps or actions is required for proper operation of the method that is being described, the order and/or use of specific steps and/or actions may be modified without departing from the scope of the claims.

In conclusion, the present disclosure provides novel air data probe assembly to facilitate rapid replacement. While detailed descriptions of one or more configurations of the disclosure have been given above, various alternatives, modifications, and equivalents will be apparent to those skilled in the art. For example, while the configurations described above refer to particular features, functions, procedures, components, elements, and/or structures, the scope of this disclosure also includes configurations having different combinations of features, functions, procedures, components, elements, and/or structures, and configurations that do not include all of the described features, functions, procedures, components, elements, and/or structures. Accordingly, the scope of the present disclosure is intended to embrace all such alternatives, modifications, and variations as fall within the scope of the claims, together with all equivalents thereof. Therefore, the above description should not be taken as limiting The invention is defined solely by the appended claims.

## Claims

1. An air data probe assembly (100), comprising,
an air data probe that comprises a baseplate portion (102) and a sensor portion (104), wherein the baseplate portion (102) comprises one or more screw holes (112) and one or more connectors (218) on an underside of the baseplate portion (102);
a baseplate gasket (101) wrapped the underside and one or more edges of the baseplate portion (102), wherein the baseplate gasket (101) comprises one or more holes corresponding to the one or more screw holes (112) and the one or more connectors (218) on the underside of the baseplate portion (102),
wherein the baseplate portion (102) is configured to be fastened to a recess in an aircraft skin (114), and the baseplate gasket (101) is configured to create a moisture-resistant seal between the air data probe and the recess in the aircraft skin (114) when the baseplate portion (102) is fastened to the recess in the aircraft skin (114).

2. The air data probe assembly (100) of claim 1, further comprising one or more screw assemblies (510), each comprising a screw (524) that is partially wrapped by a screw gasket (526), wherein each screw assembly (510) threads through one of the screw holes (112) in the baseplate portion (102), through one of the holes in the baseplate gasket (101), and into a hole in a recess of an aircraft skin (114).

3. The air data probe assembly (100) of claim 2, wherein each screw assembly (510) further comprises a spacer (530) that prevents the respective screw gasket (526) from bunching up and a cir-clip (532) that holds the spacer (530) and the respective screw gasket (526) in place along a shaft of the respective screw (524).

4. The air data probe assembly (100) of claim 1, wherein the baseplate gasket (101) wraps around the underside and edges of the baseplate portion (102) without chemical sealant.

5. The air data probe assembly (100) of claim 1, wherein a lip (108) of the baseplate gasket (101) partially wraps around an exterior-side of the baseplate portion (102) such that the lip (108) is exposed to the atmosphere when installed.

6. A method for providing an air data probe assembly (100), the method comprising:
wrapping a baseplate gasket (101) around an underside and one or more edges of a baseplate portion (102) of an air data probe to produce the air data probe assembly (100);
coupling one or more electrical components and/or pneumatic components of an aircraft to one or more connectors (218) on the underside of the air data probe;
and
securing the air data probe assembly (100) to the aircraft, wherein the baseplate gasket (101) creates a moisture-resistant seal between the air data probe and a recess in the aircraft skin (114) during flight.

7. The method of claim 6, further comprising assembling one or more screw assemblies (510), each comprising a screw (524) that is partially wrapped by a screw gasket (526), wherein each screw assembly (510) threads through one of the screw holes (112) in the baseplate portion (102), through one of the holes in the baseplate gasket (101), and into a hole in a recess of an aircraft skin (114).

8. The method of claim 7, wherein each screw assembly (510) further comprises a spacer (530) that prevents the respective screw gasket (526) from bunching up and a cir-clip (532) that holds the spacer (530) and the respective screw gasket (526) in place along a shaft of the respective screw (524).

9. The method of claim 6, wherein the wrapping comprises wrapping the baseplate gasket (101) around an underside and edges of the baseplate portion (102) without chemical sealant.

10. The method of claim 6, wherein a lip (108) of the baseplate gasket partially (101) wraps around an exterior-side of the baseplate portion (102) such that the lip (108) is exposed to the atmosphere when installed.

## Patentansprüche

1. Luftdatensondenanordnung (100), umfassend:
eine Luftdatensonde, die einen Grundplattenabschnitt (102) und einen Sensorabschnitt (104) umfasst, wobei der Grundplattenabschnitt (102) ein oder mehrere Schraubenlöcher (112) und einen oder mehrere Verbinder (218) an einer Unterseite des Grundplattenabschnitts (102) umfasst;
eine Grundplattendichtung (101), die um die Unterseite und eine oder mehrere Kanten des Grundplattenabschnitts (102) gewickelt ist, wobei die Grundplattendichtung (101) ein oder mehrere Löcher umfasst, die dem einen oder den mehreren Schraubenlöchern (112) und dem einen oder den mehreren Verbindern (218) an der Unterseite des Grundplattenabschnitts (102) entsprechen,
wobei der Grundplattenabschnitt (102) konfiguriert ist, an einer Aussparung in einer Flugzeugaußenhaut (114) befestigt zu werden, und die Grundplattendichtung (101) konfiguriert ist, eine feuchtigkeitsbeständige Abdichtung zwischen der Luftdatensonde und der Aussparung in der Flugzeugaußenhaut (114) zu erzeugen, wenn der Grundplattenabschnitt (102) an der Aussparung in der Flugzeugaußenhaut (114) befestigt ist.

2. Luftdatensondenanordnung (100) nach Anspruch 1, ferner umfassend eine oder mehrere Schraubenanordnungen (510), die jeweils eine Schraube (524) umfassen, die teilweise von einer Schraubendichtung (526) umwickelt ist, wobei jede Schraubenanordnung (510) durch eines der Schraubenlöcher (112) im Grundplattenabschnitt (102), durch eines der Löcher in der Grundplattendichtung (101) und in ein Loch in einer Aussparung einer Flugzeugaußenhaut (114) gewindet wird.

3. Luftdatensondenanordnung (100) nach Anspruch 2, wobei jede Schraubenanordnung (510) ferner einen Abstandshalter (530) umfasst, der verhindert, dass sich die jeweilige Schraubendichtung (526) zusammenballt, und einen Sicherungsring (532), der den Abstandshalter (530) und die jeweilige Schraubendichtung (526) entlang eines Schafts der jeweiligen Schraube (524) hält.

4. Luftdatensondenanordnung (100) nach Anspruch 1, wobei die Grundplattendichtung (101) ohne chemisches Dichtungsmittel um die Unterseite und die Kanten des Grundplattenabschnitts (102) gewickelt ist.

5. Luftdatensondenanordnung (100) nach Anspruch 1, wobei eine Lippe (108) der Grundplattendichtung (101) teilweise um eine Außenseite des Grundplattenabschnitts (102) gewickelt ist, sodass die Lippe (108) im installierten Zustand der Atmosphäre ausgesetzt ist.

6. Verfahren zum Bereitstellen einer Luftdatensondenanordnung (100), wobei das Verfahren umfasst:
Wickeln einer Grundplattendichtung (101) um eine Unterseite und eine oder mehrere Kanten eines Grundplattenabschnitts (102) einer Luftdatensonde, um die Luftdatensondenanordnung (100) herzustellen;
Anschließen einer oder mehrerer elektrischer Komponenten und/oder pneumatischer Komponenten eines Flugzeugs an einen oder mehrere Verbinder (218) an der Unterseite der Luftdatensonde;
und
Befestigen der Luftdatensondenanordnung (100) am Flugzeug, wobei die Grundplattendichtung (101) während des Fluges eine feuchtigkeitsbeständige Abdichtung zwischen der Luftdatensonde und einer Aussparung in der Flugzeugaußenhaut (114) erzeugt.

7. Verfahren nach Anspruch 6, ferner umfassend das Zusammenbauen einer oder mehrerer Schraubenanordnungen (510), die jeweils eine Schraube (524) umfassen, die teilweise von einer Schraubendichtung (526) umwickelt ist, wobei jede Schraubenanordnung (510) durch eines der Schraubenlöcher (112) im Grundplattenabschnitt (102), durch eines der Löcher in der Grundplattendichtung (101) und in ein Loch in einer Aussparung einer Flugzeugaußenhaut (114) gewindet wird.

8. Verfahren nach Anspruch 7, wobei jede Schraubenanordnung (510) ferner einen Abstandshalter (530) umfasst, der verhindert, dass sich die jeweilige Schraubendichtung (526) zusammenballt, und einen Sicherungsring (532), der den Abstandshalter (530) und die jeweilige Schraubendichtung (526) entlang eines Schafts der jeweiligen Schraube (524) hält.

9. Verfahren nach Anspruch 6, wobei das Umwickeln das Umwickeln der Grundplattendichtung (101) um eine Unterseite und Kanten des Grundplattenabschnitts (102) ohne chemisches Dichtungsmittel umfasst.

10. Verfahren nach Anspruch 6, wobei eine Lippe (108) der Grundplattendichtung teilweise (101) um eine Außenseite des Grundplattenabschnitts (102) gewickelt ist, sodass die Lippe (108) im installierten Zustand der Atmosphäre ausgesetzt ist.

## Revendications

1. Ensemble de sonde de données d'air (100) comprenant :
une sonde de données d'air qui comprend une partie de plaque de base (102) et une partie de capteur (104), dans lequel la partie de plaque de base (102) comprend un ou plusieurs trous de vis (112) et un ou plusieurs connecteurs (218) sur une face inférieure de la partie de plaque de base (102) ;
un joint de plaque de base (101) enroulé autour de la face inférieure et d'un ou plusieurs bords de la partie de plaque de base (102), dans lequel le joint de plaque de base (101) comprend un ou plusieurs trous correspondant au(x) trou(s) de vis (112) et au(x) connecteur(s) (218) sur la face inférieure de la partie de plaque de base (102),
dans lequel la partie de plaque de base (102) est conçue pour être fixée à un évidement dans un revêtement d'aéronef (114) et le joint de plaque de base (101) est conçu pour créer un joint résistant à l'humidité entre la sonde de données d'air et l'évidement dans le revêtement d'aéronef (114) lorsque la partie de plaque de base (102) est fixée à l'évidement dans le revêtement d'aéronef (114).

2. Ensemble de sonde de données d'air (100) selon la revendication 1, comprenant en outre un ou plusieurs ensembles de vis (510), chacun comprenant une vis (524) qui est partiellement enveloppée par un joint de vis (526), dans lequel chaque ensemble de vis (510) pénètre via l'un des trous de vis (112) dans la partie de plaque de base (102), via l'un des trous dans le joint de plaque de base (101), dans un trou dans un évidement d'un revêtement d'aéronef (114).

3. Ensemble de sonde de données d'air (100) selon la revendication 2, dans lequel chaque ensemble de vis (510) comprend en outre une entretoise (530) qui empêche le joint de vis respectif (526) de s'écraser et un circlip (532) qui maintient l'entretoise (530) et le joint de vis (526) respectif en place sur un arbre de la vis (524) respective.

4. Ensemble de sonde de données d'air (100) selon la revendication 1, dans lequel le joint de plaque de base (101) s'enroule autour de la face inférieure et des bords de la partie de plaque de base (102) sans agent d'étanchéité chimique.

5. Ensemble de sonde de données d'air (100) selon la revendication 1, dans lequel une lèvre (108) du joint de plaque de base (101) s'enroule partiellement autour d'un côté extérieur de la partie de plaque de base (102), de telle sorte que la lèvre (108) soit exposée à l'atmosphère une fois installée.

6. Procédé permettant de fournir un ensemble de sonde de données d'air (100), le procédé comprenant :
l'enroulement d'un joint de plaque de base (101) autour d'une face inférieure et d'un ou plusieurs bords d'une partie de plaque de base (102) d'une sonde de données d'air pour produire l'ensemble de sonde de données d'air (100) ;
l'accouplement d'un ou de plusieurs composants électriques et/ou pneumatiques d'un aéronef à un ou plusieurs connecteurs (218) sur la face inférieure de la sonde de données d'air ; et
la fixation de l'ensemble de sonde de données d'air (100) à l'aéronef, dans lequel le joint de plaque de base (101) crée un joint résistant à l'humidité entre la sonde de données d'air et un évidement dans le revêtement d'aéronef (114) pendant le vol.

7. Procédé selon la revendication 6, comprenant en outre l'assemblage d'un ou plusieurs ensembles de vis (510), chacun comprenant une vis (524) qui est partiellement enveloppée par un joint de vis (526), dans lequel chaque ensemble de vis (510) pénètre via l'un des trous de vis (112) dans la partie de plaque de base (102), via l'un des trous dans le joint de plaque de base (101), dans un trou dans un évidement d'un revêtement d'aéronef (114).

8. Procédé selon la revendication 7, dans lequel chaque ensemble de vis (510) comprend en outre une entretoise (530) qui empêche le joint de vis (526) respectif de s'écraser et un circlip (532) qui maintient l'entretoise (530) et le joint de vis (526) respectif en place sur un arbre de la vis (524) respective.

9. Procédé selon la revendication 6, dans lequel l'enroulement comprend l'enroulement du joint de plaque de base (101) autour d'une face inférieure et des bords de la partie de plaque de base (102) sans agent d'étanchéité chimique.

10. Procédé selon la revendication 6, dans lequel une lèvre (108) du joint de plaque de base s'enroule partiellement (101) autour d'un côté extérieur de la partie de plaque de base (102), de telle sorte que la lèvre (108) soit exposée à l'atmosphère une fois installée.
